# EUROPEAN PATENT APPLICATION

(11) **EP 4 760 367 A2**
(43) Date of publication of application: **17.06.2026**
(21) Application number: 25222190.8
(22) Date of filing: 10.12.2025
(51) Int. Cl.: G02B 6/38, H01R 13/10, H01R 13/20, H01R 13/22

(54) **HYBRID FIBER AND ELECTRICAL CONNECTOR AND TERMINATION TUBE**

(30) Priority: 16.12.2024 US 202463734247 P; 05.12.2025 US 202519410068
(71) Applicant: Panduit Corp., Tinley Park, Illinois 60487 (US)
(72) Inventor: Bolouri-Saransar, Masud, Tinley Park, 60487 (US); Huang, Yu, Tinley Park, 60487 (US); Murphy, Ryan N., Tinley Park, 60487 (US); Sedor, Thomas M., Tinley Park, 60487 (US); Castro, Jose M., Tinley Park, 60487 (US); Kose, Bulent, Tinley Park, 60487 (US); Patel, Satish I., Tinley Park, 60487 (US); Novak, Benjamin S., Tinley Park, 60487 (US); Rago, Richard A., Tinley Park, 60487 (US); Dundek, Frank J., New Lenox, 60451 (US); Marley, Kevin A., Tinley Park, 60487 (US)
(74) Representative: Kilburn & Strode LLP

(57) **Abstract**

A hybrid fiber and electrical connector is provided that includes signal transmission components for providing a compact form, while also providing effective signal transmission is disclosed. When the hybrid connector includes a pigtail, a termination tube is further included for covering an protecting fusion joints between the pigtail and a hybrid cable.

## Description

### CROSS-REFERENCE TO RELATED APPLICATION(S)

This application claims benefit to U.S. Provisional Patent Application No. 63/734,247, filed December 16, 2024, the entirety of which is hereby incorporated by reference herein.

### FIELD OF TECHNOLOGY

This disclosure relates to a hybrid fiber and electrical connector including a conductor receptacle having a predetermined shape for providing an effective electrical connection.

### BACKGROUND

Although hybrid optical and electrical cabling have been in the market for several years now, optical and electrical connectors for terminating these types of hybrid cables still mostly use conventional connectors specialized in either electrical power transmission or optical data communication, which necessitating the use of multiple connectors and cables to cater to diverse functionalities in various applications. Thus, the demand for streamlined and versatile connector solution for terminating hybrid cables has steadily increased in numerous industries and application scenarios.

This section is intended to introduce the reader to various aspects of art that may be related to various aspects of the present techniques, which are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

### SUMMARY

This disclosure relates to a hybrid connector for transmitting both fiber and electrical signals.

According to an embodiment, a hybrid fiber and electrical connector and adapter system is disclosed, the system comprising: a first simplex LC fiber optic connector; a second simplex LC fiber optic connector; and a simplex LC fiber optic adapter, wherein: a. the two fiber optic connectors are configured to transmit signals to each other via the fiber optic adapter; b. each of the fiber optic connectors includes a ")(" shape conductive receptacle on the top of the connector, near the latch of the fiber optic connector; c. the fiber optic adapter includes a conductive plate on the top of the adapter housing; d. the conductive plate in the fiber optic adapter is configured to be inserted into the ")(" shape conductive receptacle on the top of the connector when the fiber optic connector is fully inserted into the fiber optic adapter; and e. each of the ")(" shape conductive receptacles are enclosed by an insulative protector.

According to an embodiment, a hybrid fiber and electrical connector and adapter system is disclosed, the system comprising: a first duplex LC fiber optic connector; a second duplex LC fiber optic connector; and a duplex LC fiber optic adapter, wherein: a. the two fiber optic connectors are configured to transmit signals with each other via the fiber optic adapter; b. each of the fiber optic connectors has a ")(" shape conductive receptacle on the top of the connector, near the latch of the fiber optic connector; c. each channel of the fiber optic adapter includes a conductive plate on the top of the adapter housing; d. the conductive plate in the fiber optic adapter is configured to be inserted into the ")(" shape conductive receptacle on the top of the connector when the fiber optic connector is fully inserted into the fiber optic adapter; and e. each of the ")(" shape conductive receptacles are enclosed by an insulative protector.

### BRIEF DESCRIPTION OF THE DRAWINGS

FIG. 1 is a perspective view of a hybrid connector system including two hybrid connectors inserted into both sides of an adapter, according to an embodiment of this disclosure.
FIG. 2 is an exploded view of the hybrid connector system shown in FIG. 1.
FIG. 3A is a perspective view of a duplex hybrid connector included in the hybrid connector system shown in FIG. 1, according to an embodiment of this disclosure.
FIG. 3B is a magnified view of a portion of the duplex hybrid connector shown in FIG. 3A, according to an embodiment of this disclosure.
FIG. 4 is a front side view of the duplex hybrid connector shown in FIG. 3A, according to an embodiment of this disclosure.
FIG. 5 is a cross-sectional side view of the duplex hybrid connector shown in FIG. 4 taken along the line 5-5, according to an embodiment of this disclosure.
FIG. 6A is a perspective view of a simplex hybrid connector, according to an alternative embodiment of this disclosure.
FIG. 6B is a front side view of the simplex hybrid connector shown in FIG. 6A, according to an embodiment of this disclosure.
FIG. 6C is a side view of the simplex hybrid connector shown in FIG. 6A, according to an embodiment of this disclosure.
FIG. 6D is a cross-sectional view of the simplex hybrid connector shown in FIG. 6B taken along the line 6D-6D, according to an embodiment of this disclosure.
FIG. 7A is a perspective view of a conductive receptacle, according to an embodiment of this disclosure.
FIG. 7B is a front side view of the conductive receptacle shown in FIG. 7A, according to an embodiment of this disclosure.
FIG. 7C is a side view of the conductive receptacle shown in FIG. 7A, according to an embodiment of this disclosure.
FIG. 7D is a top-down view of the conductive receptacle shown in FIG. 7A, according to an embodiment of this disclosure.
FIG. 8 is a perspective view of the adapter shown in FIG. 1, according to an embodiment of this disclosure.
FIG. 9 is an exploded view of the adapter shown in FIG. 8 to provide a view into internal components, according to an embodiment of this disclosure.
FIG. 10 is an exploded view showing internal components from a first half of the adapter shown in FIG. 9, according to an embodiment of this disclosure.
FIG. 11A is a perspective view of a first half adapter comprising the adapter shown in FIG. 8, according to an embodiment of this disclosure.
FIG. 11B is a top-down view of the first half adapter shown in FIG. 11A, according to an embodiment of this disclosure.
FIG. 11C is a front-side view of the first half adapter shown in FIG. 11A, according to an embodiment of this disclosure.
FIG. 11D is a cross-sectional view of the first half adapter shown in FIG. 11C taken along the line 11D-11D, according to an embodiment of this disclosure.
FIG. 12A is a perspective view of a conductive plate included in the adapter shown in FIG. 8, according to an embodiment of this disclosure.
FIG. 12B is a top-down view of the conductive plate shown in FIG. 11A, according to an embodiment of this disclosure.
FIG. 12C is a side-view of the conductive plate shown in FIG. 11A, according to an embodiment of this disclosure.
FIG. 12D is a front-side view of the conductive plate shown in FIG. 11A, according to an embodiment of this disclosure.
FIG. 13A is a perspective view of an exemplary insertion step for the conductive plate being inserted into conductive receptacles at both ends of the conductive plate, according to an embodiment of this disclosure.
FIG. 13B is a perspective view of an exemplary insertion step for the conductive plate being inserted into conductive receptacles at both ends of the conductive plate, according to an embodiment of this disclosure.
FIG. 14A is a perspective view showing conductive receptacles according to an alternative embodiment.
FIG. 14B is a perspective view showing conductive receptacles according to an alternative embodiment.
FIG. 15 is a perspective view of a termination tube installed onto a hybrid connector assembly that has been coupled to a hybrid cable in an installed state, according to an embodiment of this disclosure.
FIG. 16A is a perspective view of the termination tube shown in FIG. 15, prior to the hybrid connector assembly being coupled to the hybrid cable, according to an embodiment of this disclosure.
FIG. 16B is a magnified view of a portion A taken from FIG. 16A, according to an embodiment of this disclosure.
FIG. 17A is a perspective view of the termination tube shown in FIG. 15, where the hybrid connector assembly has been coupled to the hybrid cable, according to an embodiment of this disclosure.
FIG. 17B is a magnified view of a portion B taken from FIG. 16A, according to an embodiment of this disclosure.
FIG. 18 is a side sectional view inside the termination tube shown in FIG. 15, according to an embodiment of this disclosure.
FIG. 19 is a side sectional view inside the termination tube shown in FIG. 15, according to an embodiment of this disclosure.
FIG. 20 is a side view of a termination tube installed onto a hybrid connector assembly that has been coupled to a hybrid cable, according to an alternative embodiment of this disclosure.
FIG. 21 is a side view of a multi-part termination tube installed onto a hybrid connector assembly that is configured to be coupled to a hybrid cable, according to an alternative embodiment of this disclosure.
FIG. 22 is a side view of the multi-part termination tube shown in FIG. 21, where the multi-part termination tube is installed onto the hybrid connector that has been coupled to the hybrid cable, according to an alternative embodiment of this disclosure.
FIG. 23 is a perspective view of a termination tube installed onto a hybrid connector assembly that has been coupled to a hybrid cable, according to an alternative embodiment of this disclosure.
FIG. 24A is a perspective view of the termination tube shown in FIG. 23, prior to the hybrid connector assembly being coupled to the hybrid cable, according to an alternative embodiment of this disclosure.
FIG. 24B is a magnified view of a portion C taken from FIG. 24A, according to an alternative embodiment of this disclosure.
FIG. 25A is a perspective view of the termination tube shown in FIG. 23, where the hybrid connector is coupled to the hybrid cable, according to an alternative embodiment of this disclosure.
FIG. 25B is a magnified view of a portion D taken from FIG. 25A, according to an alternative embodiment of this disclosure.
FIG. 25C is a magnified view of a portion E taken from FIG. 25A, according to an alternative embodiment of this disclosure.
FIG. 26 is a side sectional view inside the termination tube shown in FIG. 23, according to an embodiment of this disclosure.
FIG. 27 is a side view of a terminal tube installed onto a hybrid connector coupled to a hybrid cable, according to an alternative embodiment of this disclosure.
FIG. 28 is a side view of a multi-part terminal tube installed onto a hybrid connector coupled to a hybrid cable, according to an alternative embodiment of this disclosure.

### DETAILED DESCRIPTION

Detailed non-limiting embodiments of an adjustable wiring duct system are disclosed herein. However, it is to be understood that the disclosed embodiments are merely exemplary and may take various and alternative forms. The figures are not necessarily to scale, and features may be exaggerated or minimized to show details of particular components of the adjustable wiring duct system. Therefore, specific structural and functional details disclosed herein are not to be interpreted as limiting, but merely as a representative basis for teaching one skilled in the art.

With the foregoing in mind, this disclosure relates to a hybrid connector including components for transmitting both fiber and electrical signals in a single connector body. Recognizing the evolving needs, the hybrid connector emerges as a pioneering solution, adeptly surmounting the limitations of traditional connectors. This innovative connector seamlessly integrates the capabilities of transmitting electric power and optical data over a unified connector interface. This amalgamation of power delivery and data communication within a single hybrid connector presents many compelling advantages.

First and foremost, it reduces installation costs by consolidating normally two separate connectivity platforms of electrical and optical connectivity into a single platform and therefore reducing installation complexities. Second, it simplifies the cabling infrastructure, leading to tidier and more efficient cable management. Third, it brings versatility to system design, granting engineers and designers enhanced flexibility to tailor systems to specific needs and constraints. The applicability of such a connector extends to a wide variety of applications, particularly where electrical power delivery and high-speed data communication are indispensable. These include but are not limited to applications such as smart grid systems, industrial automation, data centers, and telecommunications networks. Existing hybrid connectors that enable the coexistence of optical fiber and electrical conductors tend to be bulky and complicated to manufacture. Therefore, it is desirable to develop a compact hybrid connector with the size and footprint of the standard fiber optic connector. Moreover, such hybrid fiber and electrical connectors could further be field terminated to bring convenience and more installation flexibility. A field terminable fiber optic connector features a stub fiber with one pre-polished end, allowing for rapid assembly with a field fiber, resulting in the swift creation of a fiber optic connector.

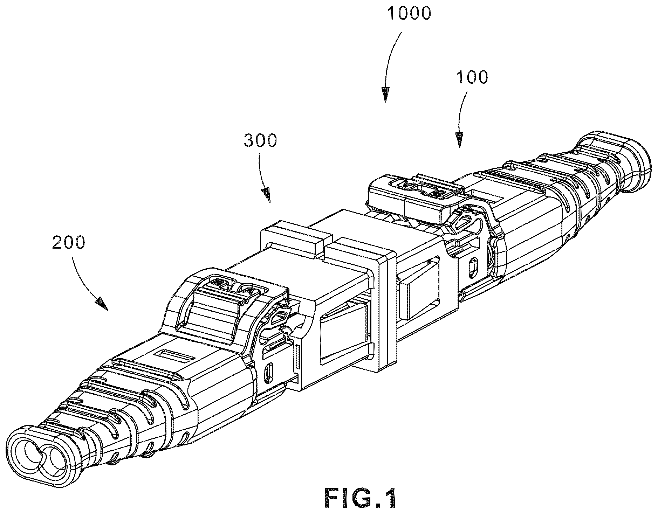

FIG. 1 shows an exemplary hybrid connector system 1000 that includes a hybrid adapter 300, where a first hybrid connector 100 is inserted into a first end of the hybrid adapter 300, and a second hybrid connector 200 is inserted into a second end of the hybrid adapter 300. The first hybrid connector 100 and the second hybrid connector 200 are the same and may be referred to as the hybrid connectors 100, 200 or the hybrid connector 100 or 200 throughout this disclosure.

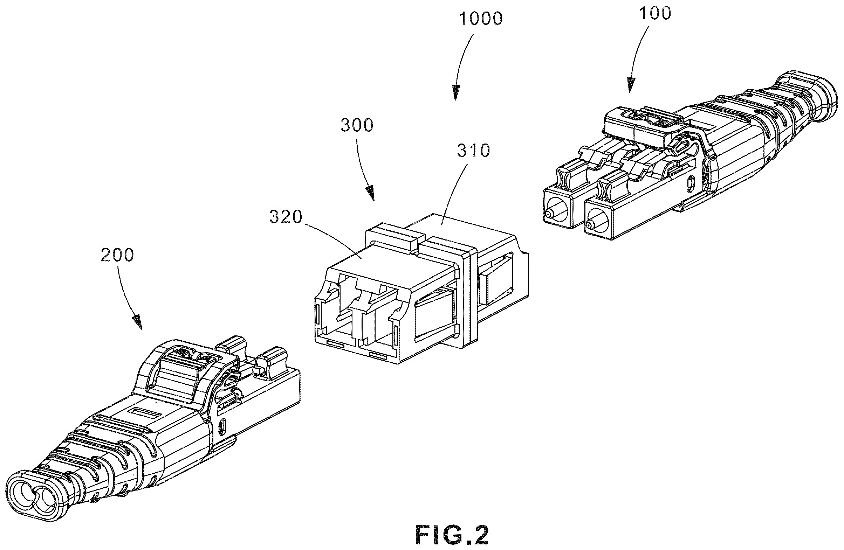

FIG. 2 shows an exploded view of the hybrid connector system 1000, where the hybrid connectors 100, 200 are shown to be duplex LC fiber connectors according to an embodiment of this disclosure. The hybrid adapter 300 includes a first half adapter 310 including openings for inserting the first hybrid adapter 100, and a second half adapter 320 including openings for inserting the second hybrid connector 200.

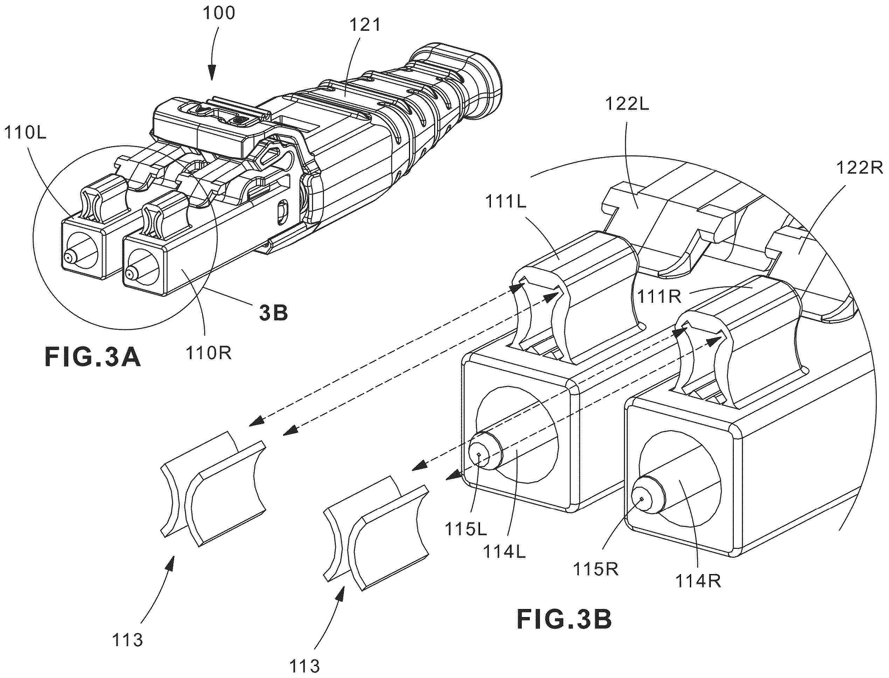

FIG. 3A shows a perspective view of the hybrid connector 100. The hybrid connector 100 includes a boot 121 to cover and protect a base of the hybrid connector where a fiber optic cable and a conductive power cable converge into the hybrid connector 100. The boot 121 is made from a flexible and/or insulative material such as, for example, a rubber or other similar elastic polymer material. Because the hybrid connector 100 is a duplex type connector, the hybrid connector 100 includes a first fiber connector 110L and a second fiber connector 110R. Each of the fiber connectors 110L, 110R includes their own latch 122L, 122R.

Each of the fiber connectors 110L, 110R also includes their own ferrule 114L, 114R and fiber optic end 115L, 115R for transmitting the optical signal from the fiber optic cable being terminated by the hybrid connector 100. The hybrid connector 100 also includes a first insulative protector housing 111L and a second insulative protector housing 111R that are positioned on top of their respective first fiber connector 110L and second fiber connector 110R. The first insulative protector housing 111L and the second insulative protector housing 111R are designed to house their respective female conductive plates 113. The first insulative protector housing 111L and the second insulative protector housing 111R are made from an electrically insulative material to prevent the further transmission of electricity and ensuring it remains protected from human contact for enhanced safety.

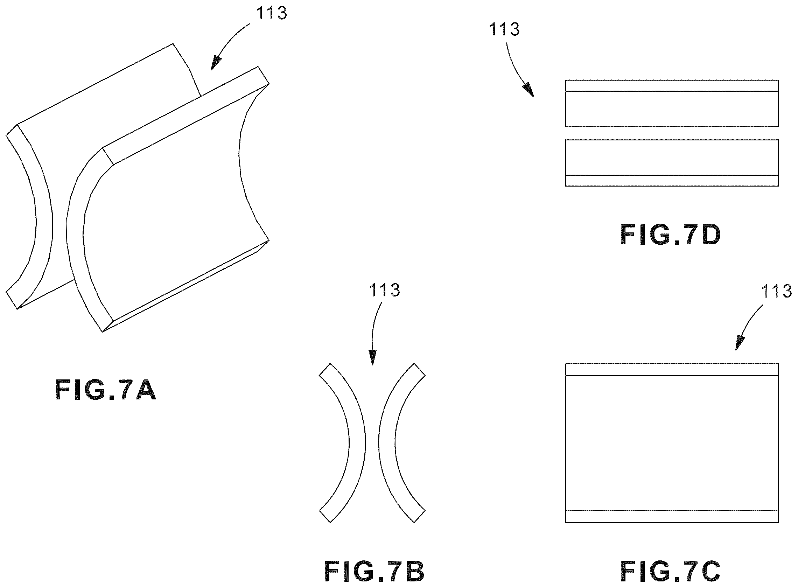

According to an embodiment of the hybrid connector 100 described herein, the female conductive plates 113 are made from a metal material for transmitting electrical signals and designed to have a predetermined shape such as the symmetrical back-to-back concave shape ")(" shown in FIG. 3B, and further exemplified by views shown in FIGs. 7A-7D. The shape of the female conductive plates 113 provides a receptacle that enables an end of a male conductive plate 112 within the hybrid adapter 300 to be securely inserted within the female conductive plates 113, while providing a compact dimension and minimum lateral stress applied to the fiber connection between the fiber connectors 110L, 110R and the fiber optic signal transmission components in the hybrid adapter 300. Thus, the shape and design of the female conductive plates 113 make it an ideal fit for integration into a fiber optic connector.

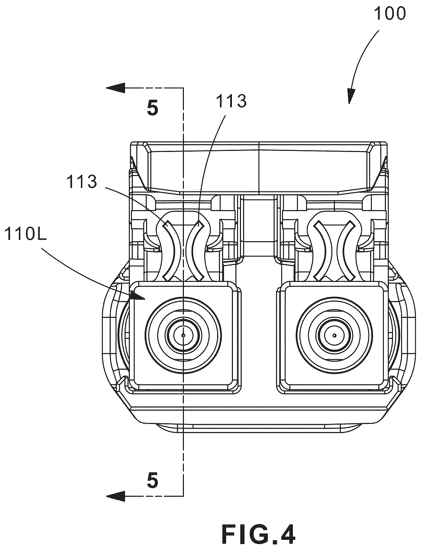

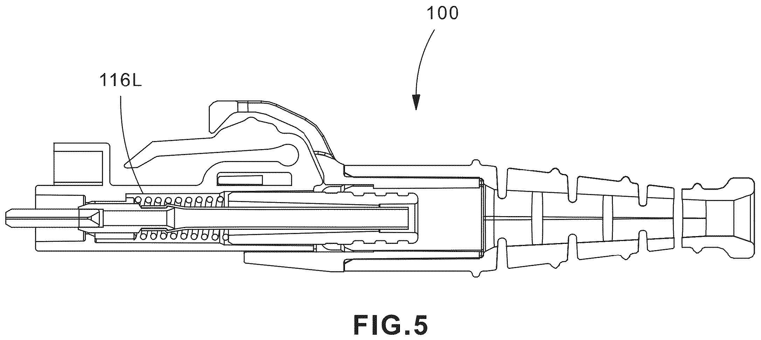

FIG. 4 shows a front side view of the hybrid connector 100, and FIG. 5 shows a cross-sectional view into the hybrid connector 100 taken along the line 5-5. As shown in FIG. 5, there may be a conductive bridge 116L along the top surface of the first fiber connector 110L for bridging the electrical transmission from the conductor wire being terminated at the hybrid connector 100 to the female conductive plates 113 being housed inside the first insulative protector housing 111L. The same components would be mirrored for the second fiber connector 110R that comprises the duplex type hybrid connector 100.

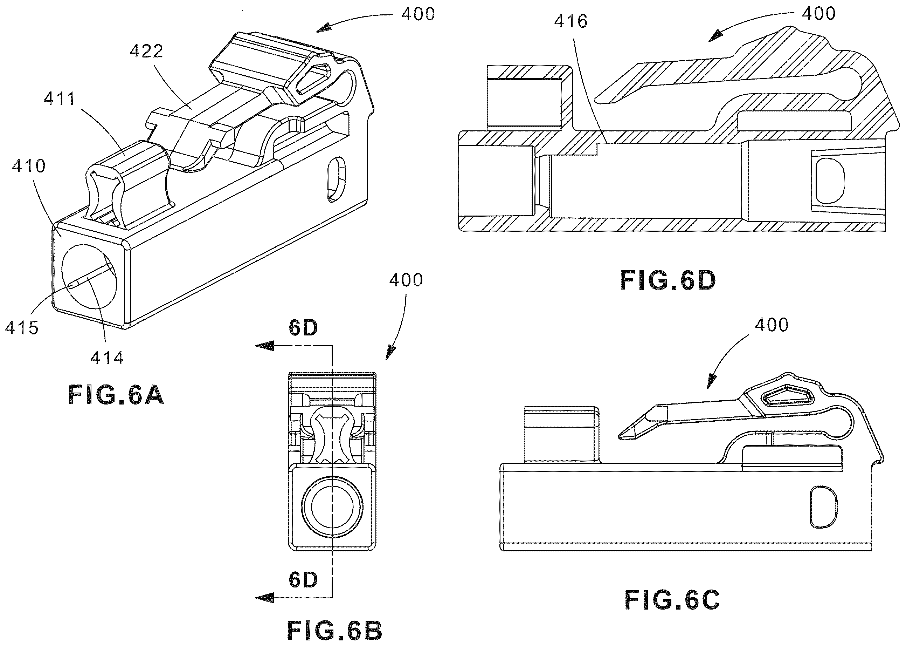

FIG. 6A shows a perspective view of a simplex type embodiment of a hybrid connector 400, according to an alternative embodiment of this disclosure. The components of the hybrid connector 400 in the simplex type embodiment are the same from the duplex type embodiment. The hybrid connector 400 includes a fiber connector 410 that houses a ferrule 414, the ferrule holding a fiber end 415. The hybrid connector 400 includes a latch 422, and an insulative protector housing 411. The insulative protector housing 411 is configured to house the female conductive plates 113.

FIG. 6B shows a front-side view of the hybrid connector 400 and FIG. 6C shows a side-view of the hybrid connector 400. FIG. 6D shows a cross-sectional view into the hybrid connector 400 along the line 6D-6D from FIG. 6B, where a conductive bridge 416 may be included on the top surface of the fiber connector 410 to bridge the electrical transmission from the conductor wire being terminated at the hybrid connector 400 to the female conductive plates 113 being housed inside the insulative protector housing 411.

FIG. 7A shows a perspective view of the female conductive plates 113, FIG. 7B shows a front side view of the female conductive plates 113, FIG. 7C shows a side view of the conductive receptacle 113, and FIG. 7D shows a top-down view of the female conductive plates 113.

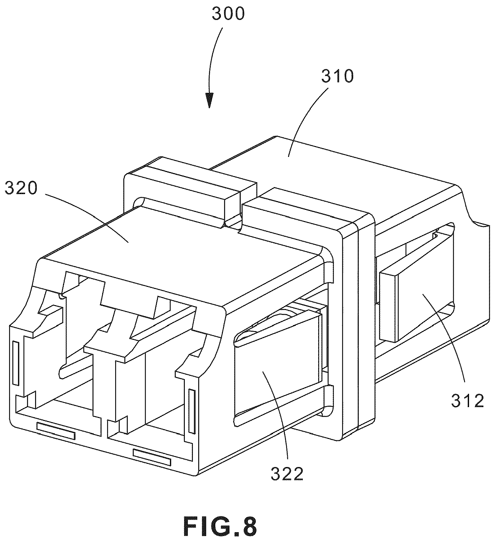

FIG. 8 shows a perspective view of the hybrid adapter 300. As described earlier, the hybrid adapter 300 includes a first half adapter 310 and a second half adapter 320. The first half adapter 310 includes latches 312 on opposite sides that mirror each other. The second half adapter 320 also includes latches 322 on opposite sides that mirror each other.

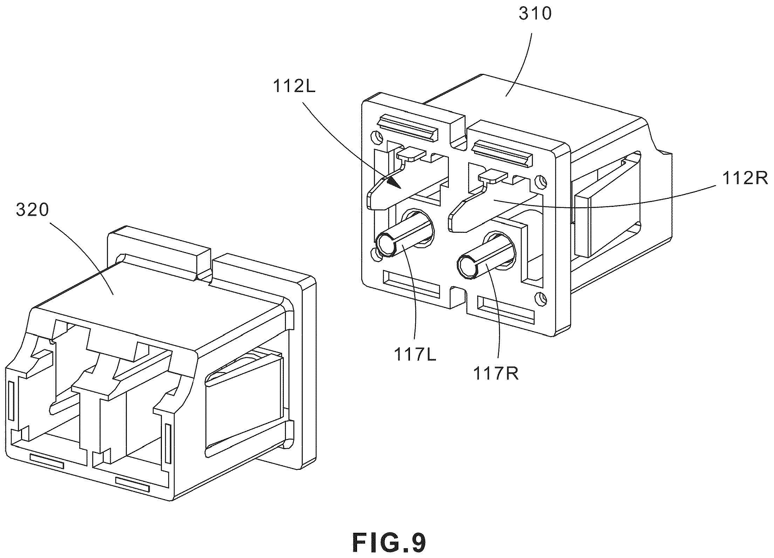

FIG. 9 shows an exploded view of the hybrid adapter 300 that shows internal components for transferring the fiber optic signal and electrical power signal. For example, a pair of split sleeves 117L, 117R hold a ferrule that itself holds the fiber for transmitting a fiber signal inside the hybrid adapter 300 that is transmitted between the first hybrid connector 100 and the second hybrid connector 200 that are installed into the hybrid adapter 300. The hybrid adapter 300 also includes male conductive plates 112L, 112R for each connector in the duplex type hybrid adapter 300. The male conductive plates 112L, 112R are housed within the first half adapter 310 and the second half adapter 320, and are connected to the female conductive plates 113 from the first hybrid connector 100 at the first end, and the female conductive plates 113 from the second hybrid connector 200 at the second opposite end.

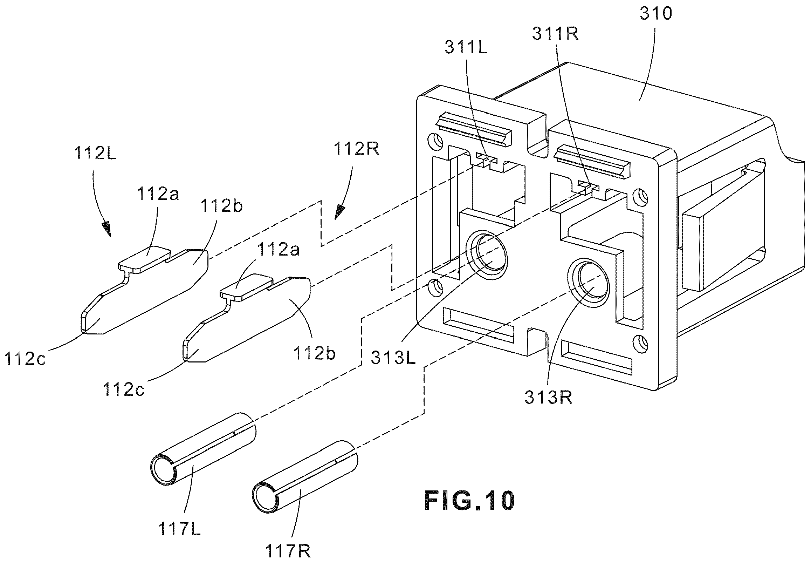

FIG. 10 shows an exploded view of the first half adapter 310 to provide an exemplary view of how the male conductive plates 112L, 112R and the split sleeves 117L, 117R are installed into the internals of the hybrid adapter 300. The male conductive plates 112L, 112R are installed into slots 311F, 311R formed on both the first half adapter 310 and the second half adapter 320. The split sleeves 117L, 117R are installed into holes 313L, 313R formed on both the first half adapter 310 and the second half adapter 320.

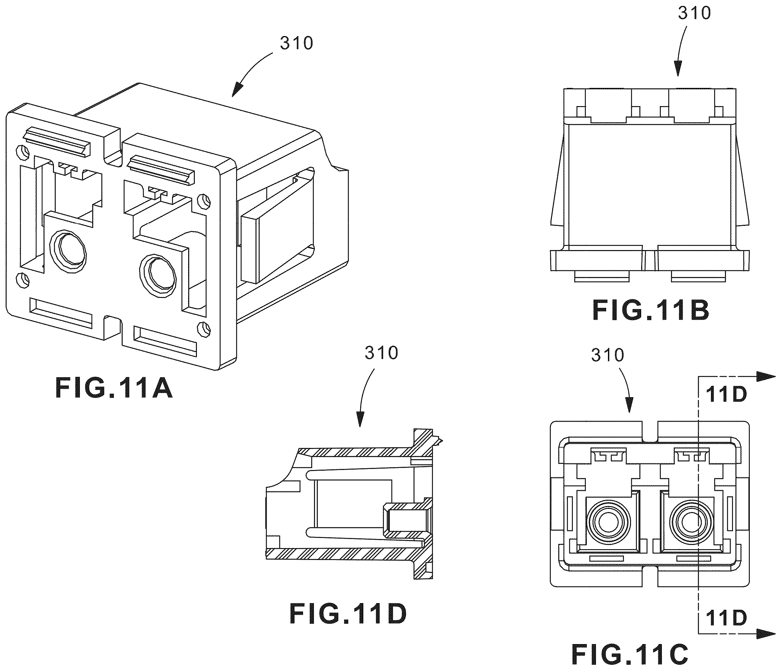

FIG. 11A shows a perspective view of the first half adapter 310, where the second half adapter 320 may be a mirror of the first half adapter 310. FIG. 11B shows a top-down view of the first half adapter 310, FIG. 11C shows a front-side view of the first half adapter 310, and FIG. 11D shows a cross-sectional view of the first half adapter 310 taken along the line 11D-11D from FIG. 11C.

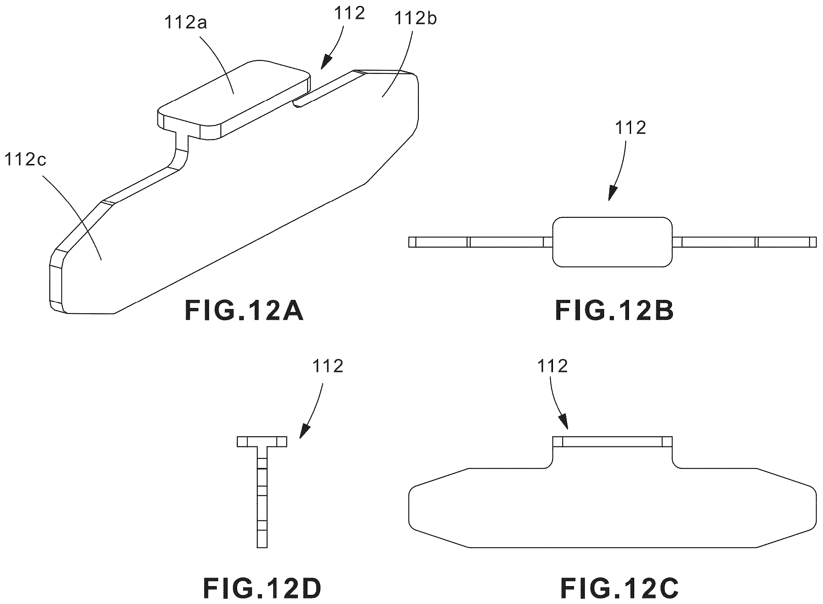

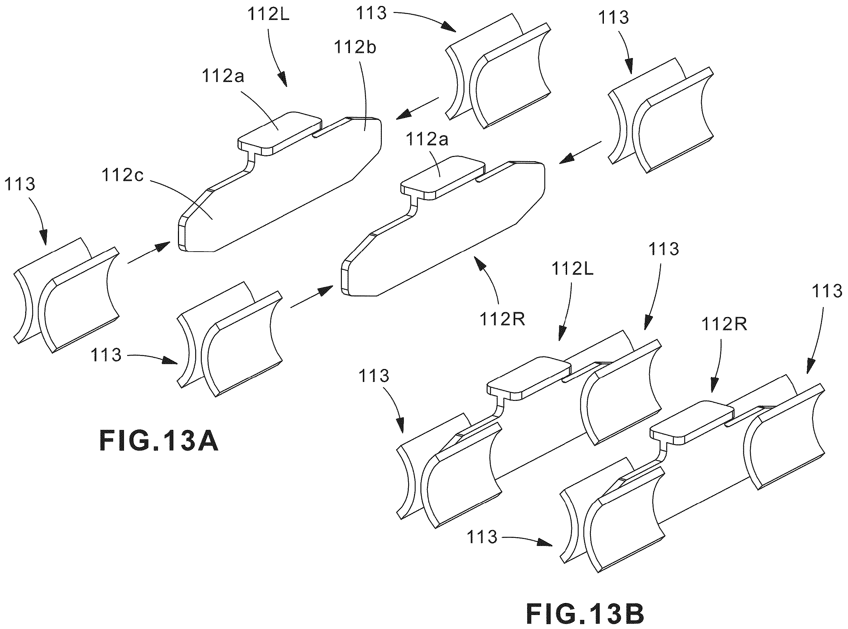

FIG. 12A shows a perspective view of the male conductive plate 112 described herein. The male conductive plate 112 includes a top shelf 112a for installing into the slots 311L, 311R of the half adapters 310, 320. The male conductive plate 112 also includes a first end 112b and a second end 112c for installing into the female conductive plates 113 at both ends, as described herein. For example, FIG. 13A shows the male conductive plates 112L, 112R before the female conductive plates 113 from the first hybrid connector 100 are installed into the first half adapter 310. FIG 13A also shows the male conductive plates 112L, 112R before the conductive receptacles 213L, 213R from the second hybrid connector 200 are installed into the second half adapter 320. Then FIG. 13B shows how the first ends 112b of the male conductive plates 112L, 112R are inserted into the female conductive plates 113 from the first hybrid connector 100, when the first hybrid connector 100 is installed into the first half adapter 310. FIG. 13A also shows how the second ends 112c of the male conductive plates 112L, 112R are inserted into the conductive receptacles 213L, 213R from the second hybrid connector 200, when the second hybrid connector 200 is installed into the second half adapter 320.

FIG. 12B shows a top-down view of the male conductive plate 112, FIG. 12C shows a side-view of the male conductive plate 112, and FIG. 12D shows a front-side view of the male conductive plate 112. When the duplex type first hybrid connector 100 is inserted into the LC duplex hybrid adapter 300, there is good contact between the female conductive plates 113 and the male conductive plates 112 in the hybrid adapter 300, so that electrical power from the first hybrid connector 100 at one side of the hybrid adapter 300 can be transferred to the second hybrid connector 200 at the other side of the hybrid adapter 300.

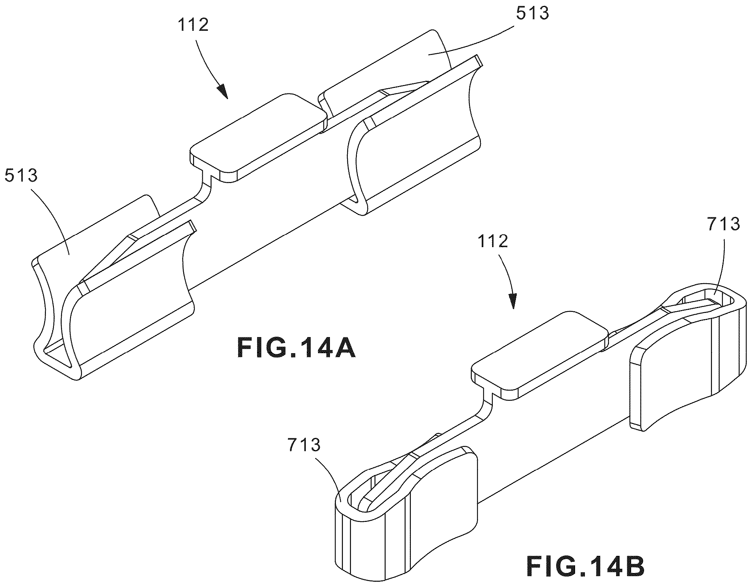

FIG. 14A shows a first alternative embodiment of a conductive receptacle 513 where the ends are connected on one end and open on the opposite second end to form a shape ") (". This shape for the conductive receptacle 513 is a modification from the ")(" shape for the female conductive plates 113 described previously. FIG. 14B shows a second alternative embodiment of a conductive receptacle 713 where the orientation of the conductive receptacle 713 is turned 90 degrees so that the ends of the male conductive plate 112 are configured to insert into the conductive receptacle 713 from a top end and not from a side as shown in FIG. 14A and FIGs. 7A-7D.

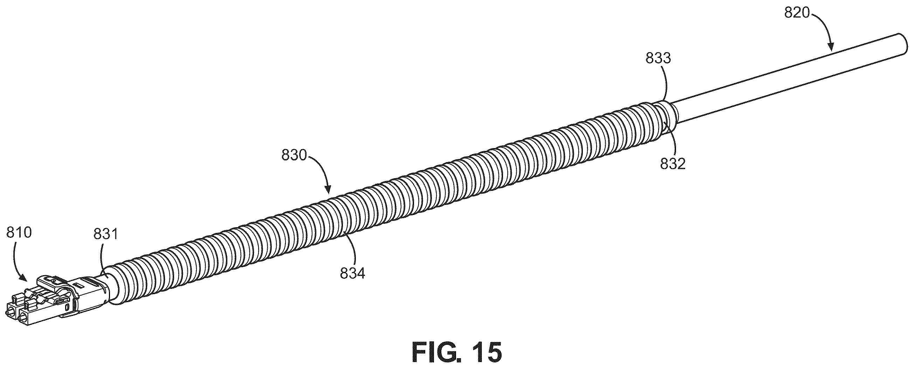

FIG. 15 shows a termination tube 830 that may be installed over portions where a hybrid cable 820 is coupled to a hybrid pigtail of a hybrid connector 810. For exemplary purposes, the hybrid connector 810 may be one of the duplex hybrid connectors described in this disclosure, or other hybrid connector that includes both an optical fiber and electrical conductor connector and pigtail. The hybrid cable 820 may include a pair of optical fibers and a pair of electrical wires, as described in other portions of this disclosure.

The termination tube 830 includes a first end 831 for attaching to a rear portion of the hybrid connector 810 and a second end 832 for attaching to the hybrid cable 820. In the installed state shown in FIG. 15, the first end 831 and/or the second end 832 may be secured using a cable tie 833 or other similar tie-down product. The termination tube 830 may be made from a plastic or other polymer material, and include corrugated features 834 to enable the termination tube 830 to be compressible when a compressing force is applied to the termination tube 830 and expand back to a natural state when the compression force is removed.

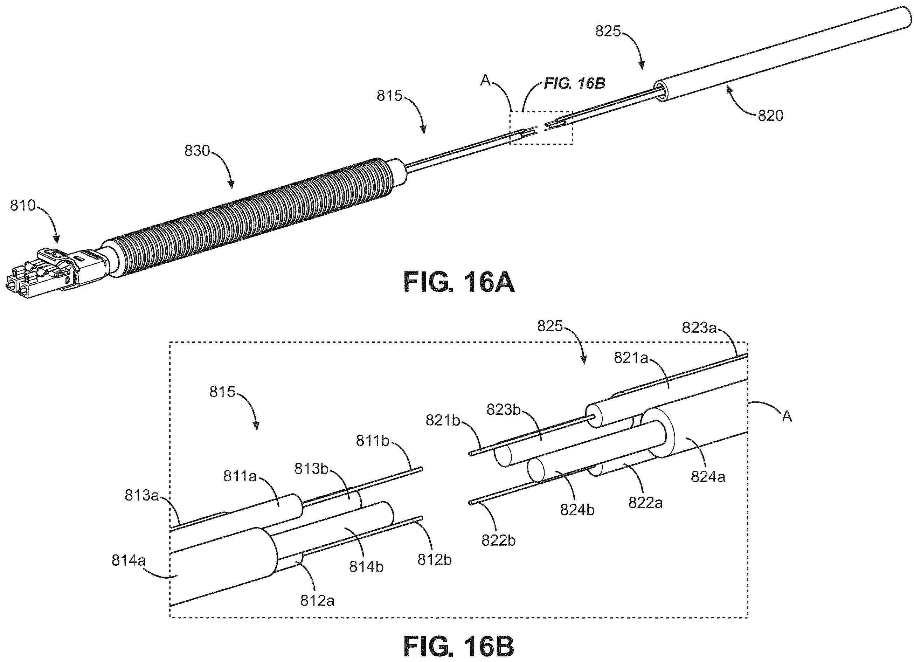

FIG. 16A shows the termination tube 830 in a compressed state where the first end 831 is abutted against a rear end to the hybrid connector 810, and the termination tube 830 is installed over a portion of a fiber pigtail 811a, 812a and an electrical wire pigtail 813a, 814a that are attached to the hybrid connector 810. The hybrid cable 820 is also prepared by removing an outer insulation jacket to expose a pair of fibers 821b, 822b and a pair of electrical wires 823b, 824b.

The pigtail 815 from the hybrid connector 810 includes the fiber pigtails 811a, 812a and the electrical wire pigtails 814a, 813a, and may be pre-installed onto the hybrid connector 810. A core 825 to the hybrid cable 820 includes the components inside the insulation jacket such as the pair of fibers 821a, 822a and a pair of electrical wires 823a, 824a.

FIG. 16B is a magnified view of a portion A from FIG. 16A, where the portion A shows how bare fibers 811b, 812b are exposed from the fiber pigtails 811a, 812a and bare fibers 821b, 822b are exposed from the pair of fibers 821a, 822a in preparation of fiber splicing. FIG. 16A also shows how bare conductors 813b, 814b are exposed from the electrical wire pigtails 814a, 813a and bare conductors 823b, 824b are exposed from the pair of electrical wires 823a, 824a in preparation for electrical conductor splicing.

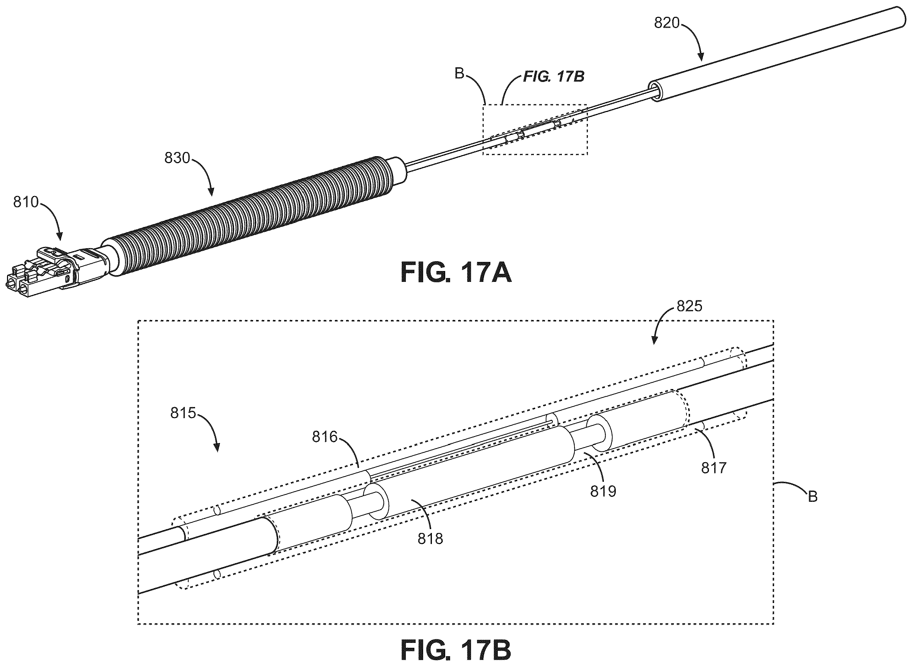

FIG. 17A shows the pigtail 815 coming from the hybrid connector 810 spliced to the core 825 of the hybrid cable 820. Specifically, FIG. 17B shows a magnified view of a portion B from FIG. 17A. In this magnified view, the bare fibers 811b, 812b are spliced to the bare fibers 821b, 822b and covered by splice protectors 816, 817. The splice between the bare fibers 811b, 812b and the bare fibers 821b, 822b may be a type of fusion splicing solution as described, for example, in this disclosure. FIG. 17B further shows the bare conductors 813b, 814b are spliced to the bare conductors 823b, 824b using a butt splice 818, where the spliced portion is then covered by a protective cover 819. After successfully completing the splicing of the pigtail 815 to the core 825, the termination tube 830 may be released to cover the spliced portion shown in FIG. 17B. For example, FIG. 15 shows the termination tube 830 covering the spliced portion in an installed state.

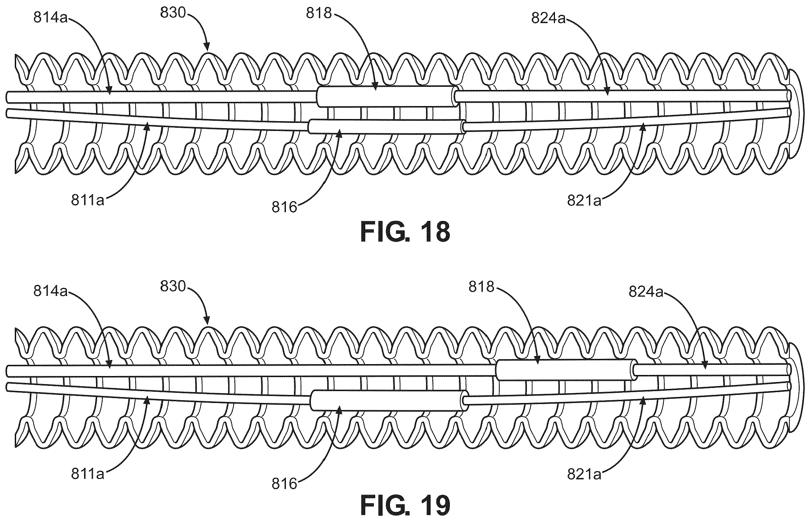

FIG. 18 shows an exemplary sectional side view inside of a portion of the termination tube 830 where the pigtail 815 is spliced to the core 825. In this embodiment, the butt splice 818 portion may be positioned to overlap, at least in part, with the splice protector 816 portion. FIG. 19 shows an alternative embodiment where the butt splice 818 portion is positioned to avoid overlapping with the splice protector 816 portion. By arranging the butt splice 818 and the splice protector 816 to avoid overlap, a smaller diameter may be used for the termination tube 830, thus allowing for a smaller profile for the termination tube 830 which may be a desirable design feature and/or result in reduced cost of materials.

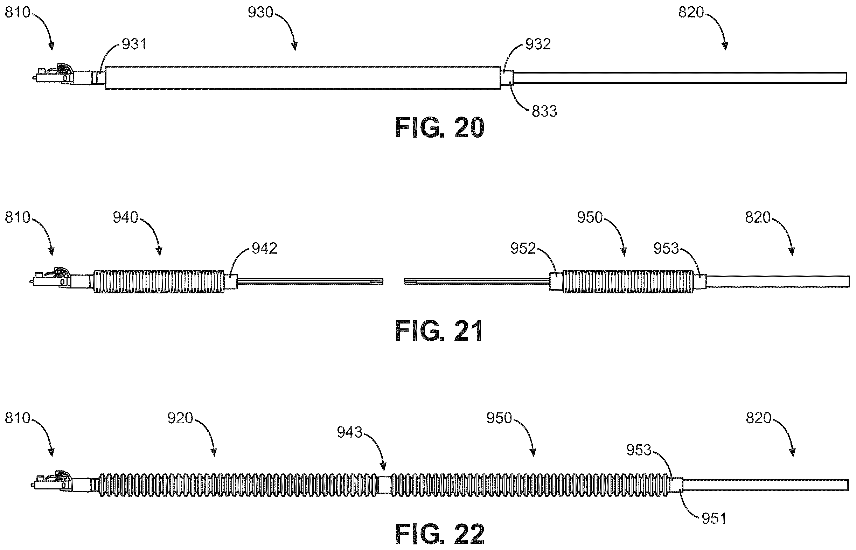

FIG. 20 shows a side view for a termination tube 930 according to an alternative embodiment. The termination tube 930 may be generally used for the same function of covering and protecting a spliced portion between the pigtail 815 coming out from the hybrid connector 810 and the core 825 of the hybrid cable 820 as described for the termination tube 830. The termination tube 930 also includes a first end 931 that attached to a rear side of the hybrid connector 810 and a second end 932 that attaches to a portion of the hybrid cable 820, where the first end 931 and/or the second end 932 may be attached using a cable tie 833 or other type of strapping device.

A difference between the termination tube 930 compared to the termination tube 830 is that the termination tube 930 is meant to slide along the pigtail 815 and/or the core 825, and the termination tube 930 does not include the corrugated features 834 and so is not configured to compress and depress. Rather, the termination tube 930 is made from a plastic, rubber, or other polymer material that enables the termination tube 930 to be flexible and slide along the pigtail 815 and/or the core 825. The termination tube 930 is also configured to largely maintain its shape so that when the termination tube 930 is bent or pulled, the splice between the pigtail 815 and/or the core 825 that resides inside the termination tube 930 is protected.

Inside the termination tube 930, the splice between the pigtail 815 and/or the core 825 may be stacked, at least in part, on top of each other, the same as shown for inside the termination tube 830 in FIG. 18. Alternatively, inside the termination tube 930, the splice between the pigtail 815 and/or the core 825 may be offset to avoid any overlap, the same as shown for inside the termination tube 830 in FIG. 19.

FIG. 21 shows a multi-part termination tube 940, 950, according to an alternative embodiment. Similar to the other termination tubes 830, 930 described herein, the multi-part termination tube 940, 950 is configured to cover and protect a splice joint that couples together the pigtail 815 and the core 825.

The multipart termination tube 940, 950 includes a first tube 940 and a second tube 950. Both the first tube 940 and the second tube 950 includes corrugated features that enable the first tube 940 and the second tube 950 to compress and revert back. To connect the first tube 940 to the second tube 950, the first tube 940 includes a male mating end 942 configured to fit into a female mating end 952 included in the second tube 950, as shown in FIG. 22. A cable tie 951 may be used to further secure the multi-part termination tube 940, 950 at a back end 953 of the second tube 950 and/or at the connection point 943 between the first tube 940 and the second tube 940. The multi-part termination tube 940, 950 may be made from a same material as explained for the termination tube 830. According to alternative embodiments, three or more tube sections may be included in a multi-part termination tube.

Inside the multi-part termination tube 940, 950, the splice between the pigtail 815 and/or the core 825 may be stacked, at least in part, on top of each other, the same as shown for inside the termination tube 830 in FIG. 18. Alternatively, inside the multi-part termination tube 940, 950, the splice between the pigtail 815 and/or the core 825 may be offset to avoid any overlap, the same as shown for inside the termination tube 830 in FIG. 19.

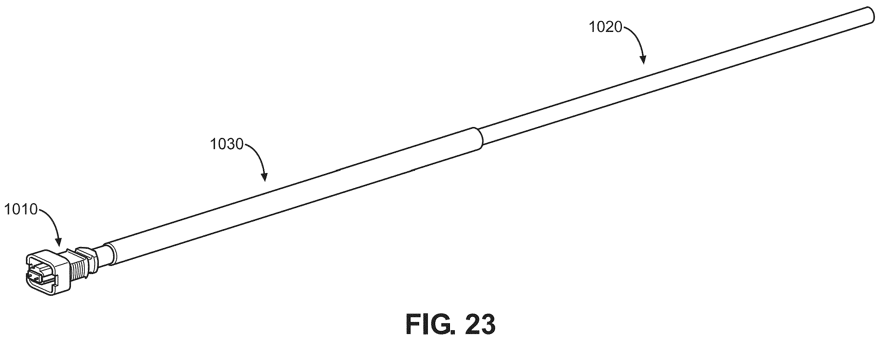

FIG. 23 shows a perspective view of a termination tube 1030 configured to cover and protect a splice joint between a pigtail 1015 attached to a hybrid connector 1010 and a core 1025 to a hybrid cable 1020. The hybrid connector 1010 may include a multi-fiber connector such as, for example, a multi-fiber push on/pull off (MPO) connector to transmit a fiber signal, as well as conductive contacts to transmit an electrical/power signal. Connected to the hybrid connector 1010 is the pigtail 1015 that includes a ribbon fiber pigtail 1013a and electrical wire pigtail 1011a, 1012a. The ribbon fiber pigtail 1013a includes a protective insulation outer layer and a plurality of fibers 1013b. The electrical wire pigtail 1011a, 1012a includes a first electrical wire 1011a and a second electrical wire 1012a, where the first electrical wire 1011a includes an outer insulation layer and an electrical conductor 1011b, and where the second electrical wire 1012a includes an outer insulation layer and an electrical conductor 1012b.

On the hybrid cable 1020, the core 1025 may be comprised of a ribbon fiber 1023a and a pair of electrical wires 1021a, 1022a. The ribbon fiber 1023a includes a protective insulation outer layer and a plurality of fibers 1023b. The pair of electrical wires 1021a, 1022a includes a first electrical wire 1021a and a second electrical wire 1022a, where the first electrical wire 1021a includes an outer insulation layer and an electrical conductor 1021b, and where the second electrical wire 1022a includes an outer insulation layer and an electrical conductor 1022b.

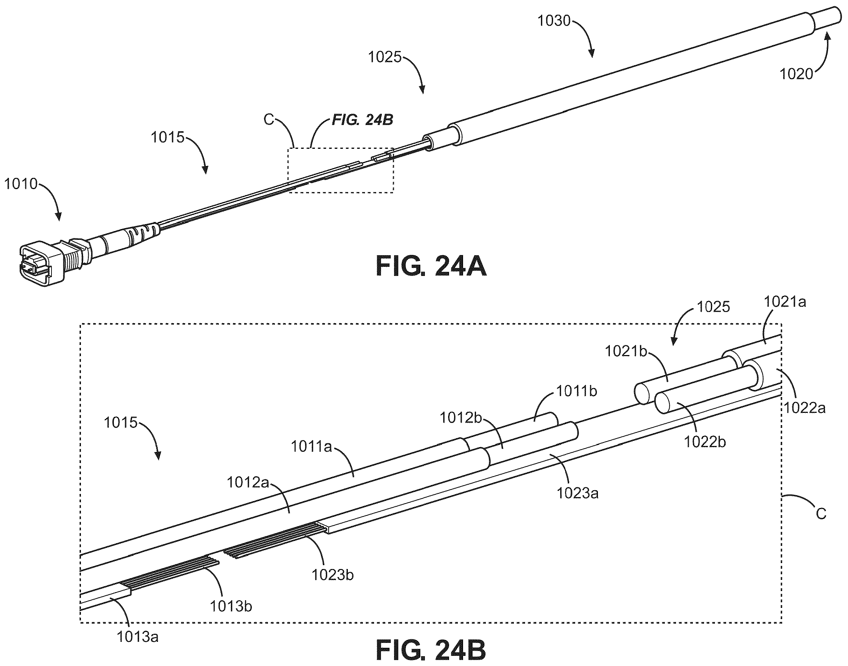

FIG. 24A shows the termination tube 1030 has been slid over a portion of the hybrid cable 1020, where the hybrid cable 1020 has been prepared by removing the outer insulation layer to expose the core 1025 comprising the ribbon fiber 1023a and the pair of electrical wires 1021a, 1022a. The pigtail 1015 from the hybrid connector 1010 has not yet been spliced to the core 1025 of the hybrid cable 1020.

FIG. 24B is a magnified view of a portion C from FIG. 24A, where the portion C shows how the bare fibers 1013b from the ribbon fiber pigtail 1013a are exposed in preparation for splicing. The portion C also shows the bare electrical conductors 1011b, 1012b are exposed from the electrical wire pigtail 1011a, 1012a in preparation for splicing. On the hybrid cable 1020, the portion C shows the bare fibers 1023b from the ribbon fiber 1023a are exposed in preparation for splicing, as well as the bare conductors 1021b, 1022b from the electrical wires 1021a, 1022a being exposed in preparation for splicing.

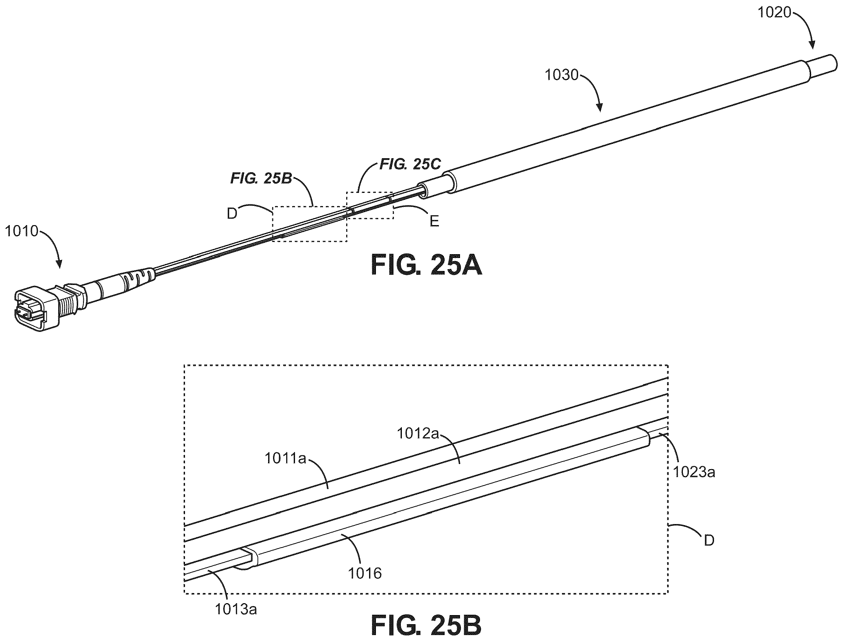

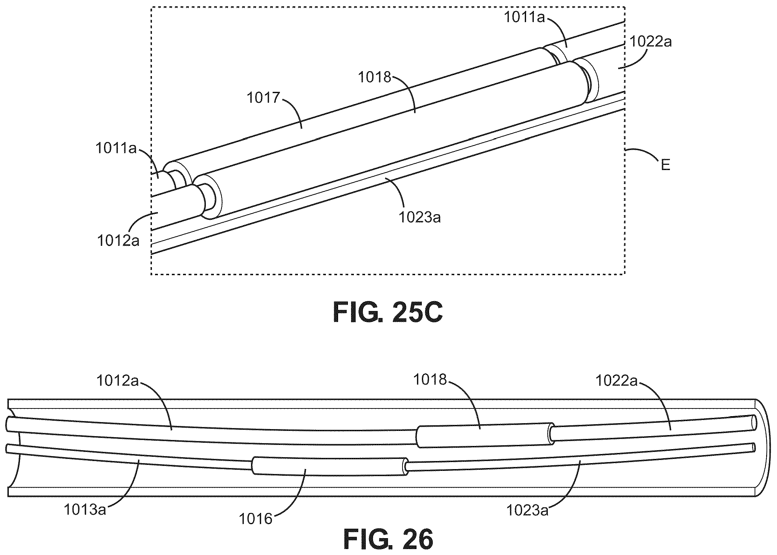

FIG. 25A shows the pigtail 1015 from the hybrid connector 1010 being spliced to the core 1025 of the hybrid cable 1020. FIG. 25B shows a magnified view of a portion D from FIG. 25A where the bare fibers 1013b from the ribbon fiber pigtail 1013a have been spliced to the bare fibers 1023b from the ribbon fiber 1023a, and this splice joint has been covered and protected with a splice protecter 1016, such as, for example, a ribbon heat shrink protector. FIG. 25C shows a magnified view of a portion E from FIG. 25A where the bare electrical conductors 1011b, 1012b have been spliced to the bare conductors 1021b, 1022b using butt splices 1017, 1018.

FIG. 26 shows an exemplary sectional side view inside a portion of the termination tube 1030 where the pigtail 1015 has been spliced to the core 1025. For example, the butt splice 1018 used for splicing the electrical wire 1012a to the electrical wire 1022a is offset from the splice protector 1016 that covers the splice joint between the ribbon fiber pigtail 1013a and the ribbon fiber 1023a.

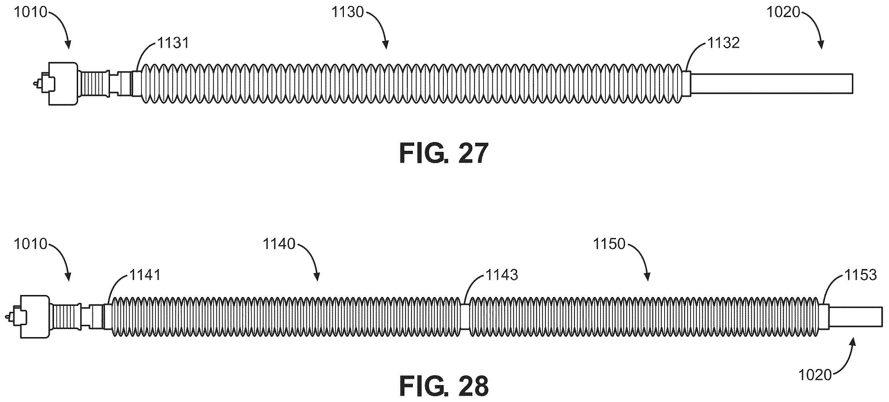

FIG. 27 shows a side view for a termination tube 1130 configured to cover and protect a splice joint between the pigtail 1015 and the core 1025, according to an alternative embodiment. The termination tube 1130 is similar to the termination tube 830 in that the termination tube 1130 includes corrugated features for enabling the termination tube 1130 to be compressible. The termination tube 1130 includes a first end 1131 and a second end 1132. A cable tie may be secured around the first end 1131 and/or the second end 1132.

FIG. 28 shows a side view for a multi-part termination tube 1140, 1150 configured to cover and protect a splice joint between the pigtail 1015 and the core 1025, according to an alternative embodiment. The multi-part termination tube 1140, 1150 includes a first tube 1140 configured to mate to a second tube 1150 at a connection point 1143, in a same manner as described for the multi-part termination tube 940, 950. The first tube 1140 includes a first end 1141, and the second tube 1150 includes a second end 1153. The one or more of the first end 1141, the second end 1153, or the connection point 1143 may be further secured using a cable tie.

A hybrid fiber and electrical connector and adapter system containing two simplex LC fiber optic connectors and a simplex LC fiber optic adapter is disclosed, wherein: a. the two fiber optic connectors can be connected to each other via the fiber optic adapter, b. each of the fiber optic connectors has a ")(" shape conductive receptacle on the top of the connector, near the latch of the fiber optic connector, c. the fiber optic adapter has a conductive plate on the top of the adapter housing, d. the conductive plate in the fiber optic adapter will be inserted into the ")(" shape conductive receptacle on the top of the connector when the fiber optic connector is fully inserted into the fiber optic adapter, and e. each of the ")(" shape conductive receptacles is enclosed by an insulative protector.

The hybrid fiber and electrical connector and adapter system, wherein the ridge of the ")(" shape conductive receptacle is parallel to the fiber direction.

The hybrid fiber and electrical connector and adapter system, wherein one end of the ")(" shape conductive receptacle is connected to form a ")_(" shape one-piece structure.

The hybrid fiber and electrical connector and adapter system, wherein both ends of the ")(" shape conductive receptacle are connected to form an enclosed one-piece structure.

The hybrid fiber and electrical connector and adapter system, wherein the ridge of the ")(" shape conductive receptacle is perpendicular to the fiber direction.

The hybrid fiber and electrical connector and adapter system, wherein one end of the ")(" shape conductive receptacle is connected to form a ") (" shape one-piece structure.

The hybrid fiber and electrical connector and adapter system, wherein both ends of the ")(" shape conductive receptacle are connected to form an enclosed one-piece structure.

The hybrid fiber and electrical connector and adapter system, wherein the conductive receptacle on the top of the connectors is connected to a conductive wire that can terminate the electrical wires of field cables.

The hybrid fiber and electrical connector and adapter system, wherein the conductive plate on the top of the adapter housing has a length between 3 to 30 mm, a height between 0.5 to 5 mm, and a thickness between 0.1 to 1.0 mm.

The hybrid fiber and electrical connector and adapter system, wherein the conductive receptacle on the top of the connector housing has a length between 2 to 30 mm, a width between 0.5 to 5 mm, and a height between 0.5 to 5 mm.

The hybrid fiber and electrical connector and adapter system, wherein the fiber optic connector features a stub fiber with one pre-polished end at the fiber optic connector's endface. In contrast, the stub fiber's other end can be seamlessly connected to a field fiber to install a fiber optic connector on a fiber optic cable.

The hybrid fiber and electrical connector and adapter system, wherein the hybrid adapter has at least one shutter to prevent the ingress of dust and debris while safeguarding the eyes of workers or technicians involved in the installation or maintenance of a fiber optic system.

The hybrid fiber and electrical connector and adapter system, wherein the hybrid fiber and electrical connectors and adapter system can be installed on a patch panel or in a cassette.

A hybrid fiber and electrical connector and adapter system containing two duplex LC fiber optic connectors and a duplex LC fiber optic adapter is disclosed, wherein a. the two fiber optic connectors can be connected to each other via the fiber optic adapter, b. each of the fiber optic connectors has a ")(" shape conductive receptacle on the top of the connector, near the latch of the fiber optic connector, c. each channel of the fiber optic adapter has a conductive plate on the top of the adapter housing, d. the conductive plate in the fiber optic adapter will be inserted into the ")(" shape conductive receptacle on the top of the connector when the fiber optic connector is fully inserted into the fiber optic adapter, and e. each of the ")(" shape conductive receptacles is enclosed by an insulative protector.

The hybrid fiber and electrical connector and adapter system, wherein the ridge of the ")(" shape conductive receptacle is parallel to the fiber direction.

The hybrid fiber and electrical connector and adapter system, wherein one end of the ")(" shape conductive receptacle is connected to form a ") (" shape one-piece structure.

The hybrid fiber and electrical connector and adapter system, wherein both ends of the ")(" shape conductive receptacle are connected to form an enclosed one-piece structure.

The hybrid fiber and electrical connector and adapter system, wherein the ridge of the ")(" shape conductive receptacle is perpendicular to the fiber direction.

The hybrid fiber and electrical connector and adapter system, wherein one end of the ")(" shape conductive receptacle is connected to form a ") (" shape one-piece structure.

The hybrid fiber and electrical connector and adapter system, wherein both ends of the ")(" shape conductive receptacle are connected to form an enclosed one-piece structure.

The hybrid fiber and electrical connector and adapter system, wherein the conductive receptacle on the top of the connectors is connected to a conductive wire that can terminate the electrical wires of field cables.

The hybrid fiber and electrical connector and adapter system, wherein the conductive plate on the top of the adapter housing has a length between 3 to 30 mm, a height between 0.5 to 5 mm, and a thickness between 0.1 to 1.0 mm.

The hybrid fiber and electrical connector and adapter system, wherein the conductive receptacle on the top of the connector housing has a length between 2 to 30 mm, a width between 0.5 to 5 mm, and a height between 0.5 to 5 mm.

The hybrid fiber and electrical connector and adapter system, wherein the fiber optic connector features a stub fiber with one pre-polished end at the fiber optic connector's endface. In contrast, the stub fiber's other end can be seamlessly connected to a field fiber to install a fiber optic connector on a fiber optic cable.

The hybrid fiber and electrical adapter and adapter system, wherein the hybrid adapter has at least one shutter to prevent the ingress of dust and debris while safeguarding the eyes of workers or technicians involved in the installation or maintenance of a fiber optic system.

The hybrid fiber and electrical connector and adapter system, wherein the hybrid fiber and electrical connectors and adapter system can be installed on a patch panel or in a cassette.

Furthermore, while the particular embodiments described herein have been shown and described, it will be obvious to those skilled in the art that changes and modifications may be made without departing from the teaching of the disclosure. For example, although the fiber connector type has been described as being applicable for LC type fiber connectors, the features described herein may be applied to other types of fiber connectors such as CS and SN type fiber connectors. The matter set forth in the foregoing description and accompanying drawings is offered by way of illustration only and not as limitation. The actual scope of the invention is intended to be defined in the following claims when viewed in their proper perspective.

## Claims

1. A hybrid fiber and electrical connector, the hybrid fiber and electrical connector comprising:
a first connector including a first fiber connector and a first electrical connector, wherein the first electrical connector comprises a first insulative protector housing positioned on a top surface of the first fiber connector and a first electrical conductor positioned inside the first insulative protector housing;
a second connector including a second fiber connector and a second electrical connector, wherein the second electrical connector comprises a second insulative protector housing positioned on a top surface of the second fiber connector and a second electrical conductor positioned inside the second insulative protector housing; and
wherein the first connector is positioned adjacent to the second connector.

2. The hybrid fiber and electrical connector of claim 1, wherein the first electrical conductor is configured in two parts having symmetrical back-to-back concave shapes.

3. The hybrid fiber and electrical connector of any preceding claim, wherein the first fiber connector and the second fiber connector are LC fiber connectors.

4. The hybrid fiber and electrical connector of any preceding claim, further comprising:
a first latch positioned behind the first electrical connector on the top surface of the first fiber connector; and
a second latch positioned behind the second electrical connector on the top surface of the second fiber connector.

5. The hybrid fiber and electrical connector of any preceding claim, further comprising:
a boot attached to a rear portion of the hybrid fiber and electrical connector, the boot configured to cover at least a portion of the hybrid fiber and electrical connector.

6. The hybrid fiber and electrical connector of any preceding claim, further comprising:
a hybrid pigtail comprising a fiber pigtail coupled to the first fiber connector and the second fiber connector, and a pair of conductor wires coupled to the first electrical connector and the second electrical connector; and
a termination tube configured to cover, at least in part, a first fusion joint where the hybrid pigtail is fused to fibers in a hybrid cable and a second fusion joint where the pair of conductor wires are fused to a pair of conductor wires in the hybrid cable.

7. The hybrid fiber and electrical connector of claim 6, wherein at least one of:
the termination tube includes corrugated features configured to compress when a compression force is applied and decompress when the compression force is released;
the termination tube is configured to maintain a rigid form to take on a pulling force applied to the hybrid cable and prevent the pulling force from being applied onto the first fusion joint and the second fusion joint;
the first fusion joint is formed to include an amount of slack in a length of the fiber pigtail and a length in the fibers from the hybrid cable that are fused to the fiber pigtail and reside inside the termination tube; or
wherein the first fusion joint is offset from the second fusion joint.

8. A hybrid fiber and electrical connector, the hybrid fiber and electrical connector comprising:
a fiber connector including a fiber ferrule configured to couple to a fiber in a fiber pigtail connected to the hybrid fiber and electrical connector; and
an electrical connector, the electrical connector comprising an insulative protector housing positioned on a top surface of the fiber connector and an electrical conductor positioned inside the insulative protector housing.

9. The hybrid fiber and electrical connector of claim 8, wherein the electrical conductor is configured in two parts having symmetrical back-to-back concave shapes.

10. The hybrid fiber and electrical connector of any of claims 8 to 9, wherein the fiber connector is an LC fiber connector.

11. The hybrid fiber and electrical connector of any of claims 8 to 10, wherein the fiber connector is a multi-fiber connector, and the fiber pigtail is a ribbon fiber pigtail including a plurality of fibers.

12. The hybrid fiber and electrical connector of any of claims 8 to 11, further comprising:
a latch positioned behind the electrical connector on the top surface of the fiber connector; and
a boot attached to a rear portion of the hybrid fiber and electrical connector, the boot configured to cover at least a portion of the hybrid fiber and electrical connector.

13. The hybrid fiber and electrical connector of any of claims 8 to 12, further comprising:
a hybrid pigtail comprising the fiber pigtail and a pair of conductor wires coupled to the electrical connector; and
a termination tube configured to cover, at least in part, a first fusion joint where the hybrid pigtail is fused to fibers in a hybrid cable and a second fusion joint where the pair of conductor wires are fused to a pair of conductor wires in the hybrid cable.

14. The hybrid fiber and electrical connector of claim 13, wherein at least one of:
the termination tube includes corrugated features configured to compress when a compression force is applied and decompress when the compression force is released;
the termination tube is configured to maintain a rigid form to take on a pulling force applied to the hybrid cable and prevent the pulling force from being applied onto the first fusion joint and the second fusion joint;
the first fusion joint is formed to include an amount of slack in a length of the fiber pigtail and a length in the fibers from the hybrid cable that are fused to the fiber pigtail and reside inside the termination tube; or
the first fusion joint is offset from the second fusion joint.
